(19) Europäisches Patentamt European Patent Office Office européen des brevets

(11) **EP 4 567 585 A1**

(12) **EUROPÄISCHE PATENTANMELDUNG**

(43) Veröffentlichungstag:
**11.06.2025 Patentblatt 2025/24**

(21) Anmeldenummer: **23214679.5**

(22) Anmeldetag: **06.12.2023**

(51) Internationale Patentklassifikation (IPC):
**G06F 8/41** *(2018.01)*

(52) Gemeinsame Patentklassifikation (CPC):
**G06F 8/4434; G06F 8/4441**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **dSPACE GmbH**
**33102 Paderborn (DE)**

(72) Erfinder:
• **Niere, Jörg**
  **33102 Paderborn (DE)**
• **Engel, Felix**
  **33102 Paderborn (DE)**

(54) **VERFAHREN ZUM ERZEUGEN EINES STEUERUNGSPROGRAMMES FÜR EINE ZIELPLATTFORM, VORRICHTUNG ZUR DATENVERARBEITUNG, COMPUTERPROGRAMMPRODUKT UND DATENTRÄGER**

(57) Die Erfindung betrifft ein computerimplementiertes Verfahren zum Erzeugen eines Steuerungsprogrammes für eine Zielplattform aus einem graphischen Steuerungsmodell einer Entwicklungsplattform, wobei die Entwicklungsplattform eine Definitionsdatenbank zum Speichern von Informationen zum graphischen Steuerungsmodell umfasst und dazu ausgestaltet ist, Matrixoperationen zu unterstützen,
dadurch gekennzeichnet, dass
in der Definitionsdatenbank Annotationsinformationen zum Aufbau von im graphischen Steuerungsmodell verwendeten Matrizen hinterlegbar sind und dass beim Erzeugen des Steuerungsprogrammes für die Zielplattform die hinterlegten Annotationsinformationen derart berücksichtigt werden, dass
a) auf der Zielplattform beim Umsetzten eines Bearbeitungsauftrages, der wenigstens eine Matrix involviert, eine Rechengeschwindigkeit erhöht ist und/oder
b) auf der Zielplattform beim Speichern der Matrizen der Speicherbedarf verringert ist.
Zudem betrifft die Erfindung ein Verfahren zum Konfigurieren einer als Steuergerät (ES) ausgestalteten Zielplattform.
Weiterhin betrifft die Erfindung eine Vorrichtung (10) zur Datenverarbeitung umfassend Mittel zur Ausführung des obigen Verfahrens, ein Computerprogrammprodukt und einen entsprechenden computerlesbaren Datenträger.

Fig. 3

EP 4 567 585 A1

**Beschreibung**

Die Erfindung betrifft ein computerimplementiertes Verfahren zum Erzeugen eines Steuerungsprogrammes für eine Zielplattform aus einem graphischen Steuerungsmodell einer Entwicklungsplattform.

Weiterhin betrifft die Erfindung ein Verfahren zum Konfigurieren einer als Steuergerät ausgestalteten Zielplattform, bei dem ein Steuerungsprogramm für die Zielplattform aus einem eingelesenen graphischen Steuerungsmodell nach dem obigen Verfahren erzeugt wird.

Zudem betrifft die Erfindung Vorrichtung zur Datenverarbeitung umfassend Mittel zur Ausführung des obigen Verfahrens.

Weiterhin betrifft die Erfindung ein Computerprogrammprodukt, umfassend Befehle, die bei der Ausführung des Programms durch einen Computer diesen veranlassen, das obige Verfahren auszuführen.

Ferner betrifft die Erfindung einen computerlesbaren Datenträger, auf dem das obige Computerprogrammprodukt gespeichert ist.

Verfahren zur computergestützten Erzeugung eines Steuerungsprogramms aus einem graphischen Steuerungsmodell sind seit längerem bekannt und gehören zu den grundlegenden Funktionalitäten von Entwicklungsumgebungen. Insbesondere lassen sich derart Programmen für Steuerungssysteme wie beispielsweise Steuergeräte erstellen.

Das graphische Steuerungsmodell liegt oft in Form eines Blockschaltbildes vor, mit dessen Hilfe beispielsweise die mathematische Funktionalität eines Regelungsalgorithmus modelliert und dargestellt werden. Mittels des graphischen Steuerungsmodelles können Prozesse, Regler und/oder allgemein das Verhalten des Steuergeräts zunächst simuliert und das Vorliegen von gewünschten Eigenschaften überprüft werden. Das das Modell bildende Blockdiagramm umfasst in der Regel mehrere über Signalverbindungen verbundene Blöcke, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block auf Eingangssignale aus dem letzten Zeitschrittes eine oder mehrere Operationen anwenden, um Ausgangssignale des aktuellen Zeitschrittes zu erzeugen. Entsprechend sind übliche Annahmen in Bezug zu Steuerungsprogrammen, wie beispielsweise einer Lebensdauer von Variablen des Steuerungsprogramms nicht ohne weiteres auf das graphische Steuerungsmodell übertragbar.

Graphische Steuerungsmodell können neben einem zyklisch ausgeführten Teilmodell zur Beschreibung näherungsweise zeitkontinuierlichen Verhaltens des Steuergerätes auch ein Teilmodell zur Beschreibung eines diskreten Verhaltens umfassen, in dem eine Anzahl von Zuständen und Übergangsbedingungen definiert sind.

Verfahren zum Erzeugen von Steuerungsprogrammen aus graphischen Steuerungsmodellen werden auch als Codegeneratoren bezeichnet. Dabei handelt es sich um ein Computerprogramm, das das graphische Steuerungsmodell in Quellcode der gewählten Zielplattform - sprich in das Steuerungsprogramm - übersetzt. Das Steuerungsprogramm liegt im Gegensatz um graphischen Steuerungsmodell in vollständig textueller Form vor und umfasst Instruktionen zur Ausführung auf der Zielplattform. Codegeneratoren gewährleisten somit eine sichere und fehlerfreie Implementierung einer abstrakten Funktionsbeschreibung (graphisches Steuerungsmodell) in ein Programm für die Zielplattform (Steuerungssystem).

Ein Verfahren zum Erzeugen eines Steuerungsprogrammes ist beispielsweise in der Druckschrift DE 10 2020 124 080 A1 oder der Druckschrift EP 2 916 183 B1 beschrieben.

Steuerungssysteme wie Steuergeräte unterliegen häufig einer Ressourcenbeschränkung hinsichtlich des zur Verfügung stehenden Speichers und/oder der Rechengeschwindigkeit. Gleichzeitig werden die zu verarbeitenden Daten insbesondere im Automobilbereich immer größer, weil sich beispielsweise die Auflösung von datenerfassenden Geräten wie Kameras verbessert. Zudem werden auch die notwendigen Steuerungsprogramme aufgrund der Entwicklung hin zu Fahrerassistenzsystemen, (hoch-)automatisiertem Fahren und/oder autonomen Fahren komplexer. So werden beispielsweise mathematische Verfahren zur iterativen Schätzung von Parametern zur Beschreibung von Systemzuständen auf der Basis von fehlerbehafteten Beobachtungen (Kalman Filter) oder Methoden zur prädiktiven Regelung von komplexen, und in der Regel multi-variablen Prozessen, wie modellprädiktive Regelungen (*Model Predictive Control*, MPC) eingesetzt. Dies führt zu einer hohen Beanspruchung der Ressourcen des Steuergerätes.

Davon ausgehend ist es die Aufgabe der Erfindung, Maßnahmen anzugeben, um eine verbesserte Ausnutzung der Ressourcen des Steuergerätes zu ermöglichen und/oder Maßnahmen anzugeben, um ressourcenschonendere Steuerungsprogramme zu erzeugen.

Diese Aufgabe wird durch den Gegenstand der Hauptansprüche gelöst. Bevorzugte Weiterbildungen finden sich in den Unteransprüchen.

Erfindungsgemäß wird also ein computerimplementiertes Verfahren zum Erzeugen eines Steuerungsprogrammes für eine Zielplattform aus einem graphischen Steuerungsmodell einer Entwicklungsplattform bereitgestellt, wobei die Entwicklungsplattform eine Definitionsdatenbank zum Speichern von Informationen zum graphischen Steuerungsmodell umfasst und dazu ausgestaltet ist, Matrixoperationen zu unterstützen, wobei in der Definitionsdatenbank Annotationsinformationen zum Aufbau von im graphischen Steuerungsmodell verwendeten Matrizen hinterlegbar sind und beim Erzeugen des Steuerungsprogrammes für die Zielplattform die hinterlegten Annotationsinformationen derart berücksichtigt werden, dass

a) auf der Zielplattform beim Umsetzten eines Bearbeitungsauftrages, der wenigstens eine Matrix involviert, eine Rechengeschwindigkeit erhöht ist und/oder

b) auf der Zielplattform beim Speichern der Matrizen der Speicherbedarf verringert ist.

Das erfindungsgemäß Verfahren nutzt in anderen Worten also die hinterlegten die Matrizen betreffenden Annotationsinformationen, um das Steuerungsprogramm, also Quellcode zu generieren, der dahingehend optimiert ist, dass bei Bearbeitungsaufträgen, die eine Matrix involvieren die Rechengeschwindigkeit erhöht ist, und zwar im Vergleich zu Quellcode, der aus dem graphischen Steuerungsmodell erzeugt wurde, ohne dass die hinterlegten Annotationsinformationen berücksichtigt wurden. Alternativ oder zusätzlich ist der erzeugte Quellcode dahingehend optimiert, dass der Speicherbedarf zum Speichern der Matrizen verringert ist, und zwar ebenfalls im Vergleich zu Quellcode, der aus dem graphischen Steuerungsmodell erzeugt wurde, ohne dass die hinterlegten Annotationsinformationen berücksichtigt wurden. Es ergibt sich also der Vorteil, dass die Annotationsinformationen hinterlegt werden und bei der Codegenerierung automatisch genutzt werden, um eine optimierte Applikationslaufzeit und/oder eine optimierte Speichernutzung im Steuerungsprogramm für das Steuergerät zu erzeugen. Dieses Vorgehen ist weit weniger fehleranfällig, als wenn ein Programmierer manuell die Struktur der Matrix bei der Implementierung des Quellcodes berücksichtigen würde.

Unter Rechengeschwindigkeit wird vorliegend die Geschwindigkeit verstanden, mit der ein Bearbeitungsauftrag auf der Zielplattform ausgeführt wird. Eine erhöhte Rechengeschwindigkeit zeigt sich in einer verkürzten Zeitspanne, die die Zielplattform zur Erledigung eines Bearbeitungsauftrages braucht. Sie führt also in anderen Worten zu einer Laufzeitverringerung für das Steuerungsprogramm.

Das Steuerungsprogramm - auch Quellcode genannt - liegt bevorzugt in vollständig textueller Form vor und umfasst bevorzugt Instruktionen für das Steuergerät.

Unter einer Matrix wird vorliegend ein n x m System mit $n \geq 1$ und $m \geq 1$ verstanden. Bei einer Matrix kann es sich also auch um ein System mit $n = 1$ und/oder $m = 1$ handeln. Im Unterschied zu einem Vektor, unter dem vorliegend ein orientierungsloses n-Tupel an Werten verstanden wird, der in anderen Worten also lediglich eine Länge n aufweist, ist die Matrix somit nicht orientierungslos. Aufgrund der Orientierungslosigkeit eines Vektors kann dieser als Spalten- oder Zeilenmatrix interpretiert werden. Eine Matrix kann in einer Programmiersprache als 2D-Array implementiert werden. In diesem Fall handelt es sich bei der Matrix um einen Speicherblock mit fester Größe. Alternativ kann die Matrix als Menge von Tupeln (Zeile, Spalte, Wert) implementiert werden. In diesem Fall ist die Größe der Matrix abhängig von den Einträgen, die nicht dem Standardwert (typischerweise 0) entsprechen.

Bevorzugt liegt das graphische Steuerungsmodell in der Form eines Blockdiagrammes vor, das bevorzugt eine Vielzahl an Blöcken umfasst, die miteinander über Signalverbindungen verbunden sind. Die Blöcke in dem Blockdiagramm können atomar sein, also aus Sicht der umgebenden Blöcke eine Einheit bilden, bei der zu Beginn eines Rechenschritts alle Eingangssignale anliegen müssen und zum Ende eines Rechenschritts alle Ausgangssignale vorhanden sind. Wenn Blockdiagramme hierarchisch sind, kann eine Vielzahl von Blöcken in einer untergeordneten Ebene den Aufbau eines Blocks in einer übergeordneten Ebene beschreiben. Hierarchische bzw. zusammengesetzte Blöcke, auch wenn diese atomar sind, können eine Vielzahl von Blöcken in einer untergeordneten Ebene umfassen. Zusammengesetzte Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren.

Über die Signalverbindung können Daten bzw. Signale übertragen werden; hierbei gibt ein erster Block einen Wert oder je nach Definition mehrere zusammengehörige Werte aus und ein nachfolgender zweiter Block empfängt diese als sein Eingangssignal und berücksichtigt sie bei der Ermittlung von seinem Ausgangsignal - sprich bei der Ermittlung von einem oder mehreren zusammengehörigen Ausgabewerten. Signale können skalare Variablen und/oder strukturierte Datentypen wie Arrays enthalten, oder als Matrizen ausgestaltet sein. Innerhalb der Blöcke können somit zum Beispiel zum Ermitteln des Ausgangsignals des Blockes Matrixoperationen durchgeführt werden.

Insbesondere wenn im graphischen Steuerungsmodell Matrizen verwendet werden, ist dies mit einem Zugriff auf eine mehrkomponentige Variable verbunden, was bedeutet, dass bei der Umsetzung des graphischen Steuerungsmodell in Quellcode ohne Kenntnis der Struktur der Matrix viel Quellcode generiert wird, da jede Komponente der Matrix einzeln abgearbeitet werden muss. Hingegen lässt sich bei Kenntnis der Struktur der Matrix, sprich über die in der Definitionsdatenbank hinterlegten Annotationsinformationen zum Aufbau der Matrizen, der Quellcode in einer Form erzeugen, bei der die Rechengeschwindigkeit erhöht ist und/oder der Speicherbedarf verringert ist. In anderen Worten wird es durch eine semantische Festlegung der Annotationen dem Codegenerator ermöglicht, eine optimale Speicherablage der Matrizen und/oder optimale Codemuster im Quellcode bei der Implementierung der Matrixoperationen zu generieren.

Gemäß einer bevorzugten Weiterbildung der Erfindung ist in diesem Zusammenhang vorgesehen, dass beim Erzeugen des Steuerungsprogrammes die hinterlegten Annotationsinformationen derart berücksichtigt werden, dass beim Umsetzen des Bearbeitungsauftrages, der wenigstens eine Matrix involviert, auf der Zielplattform

- weniger Rechenschritte erforderlich sind, und/oder
- weniger Zugriffe auf die Matrix erforderlich sind.

In anderen Worten wird der Quellcode also in der Form generiert, dass mit weniger Rechenschritten der Bearbeitungsauftrag umgesetzt wird, und/oder dass mit weniger Zugriffen auf die Matrix der Bearbeitungsauftrag umgesetzt wird.

In Bezug zu weniger Rechenschritten und/oder weniger Zugriffen ist es insbesondere bei Matrixmultiplikationen, sowie Matrixadditionen und Matrixsubtraktionen als Bearbeitungsauftrag möglich, bei Kenntnis der Struktur der Matrix Rechenschritte einzusparen:

Wenn beispielsweise aufgrund der Annotationsinformation bekannt ist, dass es sich bei zwei in eine Matrixmultiplikation involvierten Matrizen jeweils um eine obere Dreiecksmatrix handelt, dann können Schritte aus der Berechnung der Matrixmultiplikation wegfallen, weil das Produkt von zwei oberen Dreiecksmatrizen auch eine obere Dreiecksmatrix ist. Analoges gilt für die untere Dreiecksmatrix und die strikte obere bzw. strikte untere Dreiecksmatrix. Unter einer Dreiecksmatrix wird eine quadratische Matrix verstanden, die sich dadurch auszeichnet, dass alle Einträge unterhalb (obere Dreiecksmatrix) bzw. oberhalb (untere Dreiecksmatrix) der Hauptdiagonale null sind. Zudem handelt es sich um eine strikte Dreiecksmatrix (auch als echte Dreiecksmatrix bezeichnet), wenn zusätzlich auch alle Einträge auf der Hauptdiagonale null sind.

In einem weiteren Beispiel lassen sich Rechenschritte einsparen, wenn aufgrund der Annotationsinformation bekannt ist, dass es sich bei einer in die Matrixmultiplikation involvierte Matrix um eine obere oder untere Dreiecksmatrix handelt und zudem bekannt ist, dass die Werte auf der Haupt- und/oder Nebendiagonalen den gleichen Wert haben. In diesem Beispiel lassen sich Schritte aus der Berechnung entfernen, weil die Koeffizienten sich durch die Konstanten oder sogar Null ergeben. Im Extremfall könnte die Berechnung vollständig entfallen, wenn bei dem Matrixprodukt $C = AB$, die Matrix A eine untere Dreiecksmatrix mit Null auf der Hauptdiagonalen ist (also eine strikte untere Dreiecksmatrix) und B eine obere Dreiecksmatrix ist.

Zudem lassen sich auch Rechenschritte einsparen, wenn aufgrund der Annotationsinformation bekannt ist, dass bei den in die Matrixmultiplikation involvierten Matrizen nur wenige Elemente ungleich Null sind, es sich in anderen Worten um zwei dünnbesetzte Matrizen (*sparse matrix*) handelt. Eine Berechnung des Matrixproduktes $C = AB$ dahingehend, dass die Matrix C initial mit Null angelegt wird und lediglich diejenigen Elemente ungleich Null in einzelnen Schritten berechnet werden, führt bei zwei dünnbesetzten Matrizen A, B unter Umständen zu weniger Rechenschritten als die klassische Auswertung des Matrixproduktes. Unter einer dünnbesetzten Matrix wird eine Matrix verstanden, bei der viele Einträge aus Nullen bestehen. Bevorzugt wird vorliegend von einer dünnbesetzten Matrix gesprochen, wenn die Anzahl der Elemente ungleich Null nicht größer als die Anzahl der Zeilen oder Spalten ist.

In einem weiteren Beispiel lassen sich Rechenschritte einsparen, wenn aufgrund der Annotationsinformation bekannt ist, dass es sich bei einer in eine Multiplikation einer Matrix mit einer Spaltenmatrix involvierten Matrix um eine Diagonalmatrix handelt. Als Diagonalmatrix bezeichnet man eine quadratische Matrix, bei der alle Elemente außerhalb der Hauptdiagonale Null sind. Ohne Kenntnis der Struktur der Matrix wäre beispielsweise bei einer Multiplikation einer 5x4 Matrix mit einem 5x1 Spaltenmatrix insgesamt $5*5 = 25$ Multiplikationen und $5*4 = 20$ Additionen notwendig. Wenn hingegen bekannt ist, dass es sich bei der 5x4 Matrix um eine Diagonalmatrix handelt, sind lediglich 5 Multiplikationen notwendig. Wenn zudem noch bekannt ist, dass die Werte auf der Diagonale der Diagonalmatrix gleich sind, entfallen zudem weitere vier Zugriffe auf die Matrix, da der gemeinsame Wert in einem Register zwischengespeichert werden kann. Bei einer Multiplikation einer Matrix mit einer Spaltenmatrix ist das Ergebnis eine Matrix und insbesondere eine Spaltenmatrix, also ein n x m System mit m = 1.

Bei der oben beschriebenen Multiplikation kann es sich auch um eine Matrix-Vektor-Multiplikation handeln, also um eine Multiplikation einer Matrix mit einem orientierungslosen n-Tupel. In diesem Fall ist das Ergebnis der Matrix-Vektor-Multiplikation ein Vektor, und keine Spaltenmatrix. Die Ausführungen zum Einsparen von Rechenschritten gelten genauso.

Analog verhält es sich bei der Auswertung eines Produktes einer Matrix mit einer Spaltenmatrix, wenn es sich bei der Matrix um eine dünnbesetzte Matrix handelt. Diese kann sehr effizient erfolgen, indem die Nullen in der Berechnung des Produkts nicht berücksichtigt werden. Auch hier kann es sich vorliegend bei der Spaltenmatrix um einen Vektor handeln.

Bevorzugt ist also in anderen Worten vorgesehen, dass die Annotationsinformation die Matrix als obere Dreiecksmatrix, untere Dreiecksmatrix, Diagonalmatrix, Bandmatrix, Matrix mit gleichen Werten auf der Hauptdiagonale, Matrix mit gleichen Werten auf der Nebendiagonale, Einheitsmatrix, symmetrische Matrix, dünnbesetzte Matrix, Permutationsmatrix und/oder reguläre Matrix charakterisiert, und

a) in einer Matrixmultiplikation diejenigen Rechenschritte weggelassen werden, bei denen die komponentenweise Multiplikation Null ergibt, und/oder

b) in einer Matrixaddition und/oder Matrixsubtraktion diejenigen Rechenschritte weggelassen werden, bei denen zwei Nullelemente miteinander addiert oder voneinander subtrahiert werden.

Unter einer Bandmatrix wird eine Matrix verstanden, bei der zusätzlich zur Hauptdiagonalen nur eine bestimmte Anzahl von Nebendiagonalen Elemente ungleich null aufweist. Es handelt sich bei der Bandmatrix somit um eine dünnbesetzte Matrix mit einer speziellen Struktur. Die Einheitsmatrix (auch als Identitätsmatrix) ist eine quadratische Matrix, deren Elemente auf der Hauptdiagonale eins und überall sonst null sind. Unter einer symmetrischen Matrix wird eine quadratische Matrix verstanden, deren Einträge spiegelsymmetrisch bezüglich der Hauptdiagonale sind. Eine symmetrische Matrix stimmt demnach mit ihrer transponierten Matrix überein. Eine Permutationsmatrix (auch als Vertauschungsmatrix bezeichnet) ist eine Matrix, bei der in jeder Zeile und in jeder Spalte genau ein Eintrag eins ist und alle anderen Einträge null sind. Unter einer regulären Matrix (auch als invertierbare oder nichtsinguläre Matrix bezeichnet) wird eine quadratische Matrix verstanden, die eine Inverse besitzt.

In Bezug zu weniger Rechenschritten und/oder weniger Zugriffen ist es zudem auch bei Matrixzerlegungen als Bearbeitungsauftrag möglich, bei Kenntnis der Struktur der Matrix Rechenschritte einzusparen: Ist zum Beispiel bekannt, dass es sich bei der Matrix um eine symmetrische positiv definite Matrix handelt, kann eine Cholesky-Zerlegung (auch Cholesky-Faktorisierung genannt) zur Zerlegung der Matrix A in ein Produkt aus einer unteren Dreiecksmatrix L, einer Diagonalmatrix D und der Transponierten der unteren Dreiecksmatrix $L^T$ verwendet werden. Da die Cholesky-Zerlegung schneller als andere Zerlegungsverfahren arbeitet, führt das Berücksichtigen der Annotationsinformationen zu weniger Rechenschritten und schlussendlich zu einem ressourcenschonenden Steuerungsprogramm.

Analog verhält es sich beispielsweise mit einer LR-Zerlegung (auch LU-Zerlegung oder Dreieckszerlegung genannt), bei der eine Matrix A in ein Produkt einer linken unteren normierten Dreiecksmatrix L und einer rechten oberen Dreiecksmatrix R zerlegt wird. Voraussetzung für die LR-Zerlegung ist, dass die Matrix A eine reguläre Matrix ist, also eine quadratische Matrix, die eine Inverse besitzt.

Bevorzugt ist also in anderen Worten vorgesehen, dass die Annotationsinformation die Matrix als obere Dreiecksmatrix, untere Dreiecksmatrix, Diagonalmatrix, Bandmatrix, Matrix mit gleichen Werten auf der Hauptdiagonale, Matrix mit gleichen Werten auf der Nebendiagonale, Einheitsmatrix, symmetrische Matrix, dünnbesetzte Matrix, Permutationsmatrix und/oder reguläre Matrix charakterisiert, und in einer Zerlegung der Matrix ein an die Eigenschaften der Matrix angepasstes Zerlegungsverfahren durchgeführt wird.

Ein weiterer Vorteil der Annotationsinformationen ist, dass dem Codegenerator ermöglicht werden kann, auf hardwarespezifische Eigenheiten der Zielplattform - sprich des Steuergerätes einzugehen. In diesem Zusammenhang ist gemäß einer weiteren bevorzugten Weiterbildung der Erfindung vorgesehen, dass die Zielplattform wenigstens zwei Recheneinheiten zum Umsetzten von Bearbeitungsaufträgen umfasst, wobei beim Erzeugen des Steuerungsprogrammes die hinterlegten Annotationsinformationen derart berücksichtigt werden, dass festgelegt wird, welche der Recheneinheiten zum Umsetzten des Bearbeitungsauftrages, der wenigstens eine Matrix involviert, verwendet wird. Bei den zwei Recheneinheiten kann es sich vorzugsweise um zwei unterschiedlich ausgestaltet Recheneinheiten wie einen Hauptprozessor (CPU, *central processing unit*), einen Graphikprozessor (GPU, *graphics processing unit*) und/oder eine Tensor-Prozessor (TPU, *tensor processing unit*) handeln. Durch die erfindungsgemäße Verfahrensweise wird ermöglicht, dass bei der Übersetzung des grafischen Steuerungsmodells in Quellcode der Quellcode nicht lediglich von der ersten Recheneinheit Gebrauch macht, sondern auch von der zweiten Recheneinheit. Das Verfahren erzwingt bevorzugt also, dass das grafische Steuerungsmodell auf der Zielplattform sowohl auf der ersten Recheneinheit wie auch auf der zweiten Recheneinheit berechnet wird, so dass insgesamt eine bessere Ressourcenausnutzung resultiert. Insbesondere wird beim Erzeugen des Steuerungsprogrammes für die Zielplattform aus einem graphischen Steuerungsmodell geprüft, ob es sich in Bezug zur Applikationslaufzeit lohnt, Teile des erzeugten Quellcodes von der ersten Recheneinheit auf die zweite Recheneinheit zu transferieren und das Ergebnis der Berechnung wieder zurückzuspielen.

Wie bereits erwähnt kann die in der Definitionsdatenbank hinterlegte Annotationsinformationen zum Aufbau von im graphischen Steuerungsmodell verwendeten Matrizen beim Erzeugen des Steuerungsprogrammes für die Zielplattform nicht nur derart berücksichtigt werden, dass auf der Zielplattform beim Umsetzten des Bearbeitungsauftrages, der wenigstens eine Matrix involviert, die Rechengeschwindigkeit erhöht ist, sondern auch dahingehend berücksichtig werden, dass auf der Zielplattform beim Speichern der Matrizen der Speicherbedarf verringert ist. In diesem Zusammenhang ist gemäß einer weiteren bevorzugten Weiterbildung der Erfindung vorgesehen, dass beim Erzeugen des Steuerungsprogrammes die hinterlegten Annotationsinformationen derart berücksichtigt werden, dass beim Speichern der Matrix auf der Zielplattform

- eine Matrix als Array gespeichert wird, oder

- zwei Matrizen gemeinsam in einer Matrix gespeichert werden.

Beispielsweise können für eine untere Dreiecksmatrix die Nullelemente in der oberen Hälfte beim Speichern entfallen, indem ein Array nur diejenigen Werte speichert, die für eine untere Dreiecksmatrix notwendig sind. Die Information, dass es sich bei dem Array um eine untere Dreiecksmatrix handelt, wird aber bei einer nachfolgenden Operation aufgrund der Annotationsinformation berücksichtigt.

In einem weiteren Beispiel kann eine Diagonalmatrix als Array gespeichert werden, indem lediglich die Diagonalelemente gespeichert werden. Damit müssen beispielsweise bei einer Matrix der Größe 5x5 nicht 25 Elementen gespeichert werden, sondern lediglich ein Array der Größe 5. Analog verhält es sich bei einer Bandmatrix, bei der lediglich die Werte und Größe des Bandes gespeichert werden müssen.

Noch weitere Einsparung von Speicher ist möglich, wenn es sich bei der Matrix um eine Diagonalmatrix der Größe n mit gleichen Werten auf der Diagonalen handelt oder sogar um eine Einheitsmatrix: eine Einheitsmatrix der Größe n wird implizit durch die Annotationsinformation beschrieben und muss nicht explizit durch eine nxn große Matrix implementiert werden. Bei der Diagonalmatrix der Größe n mit gleichen Werten auf der Diagonale lässt sich vollständig durch einen Array der Länge 2 mit Angabe der Größe der Matrix und des Wertes der Diagonalelemente beschreiben. In anderen Worten ermöglicht die Annotationsinformation also den Aufbau der Matrix als kompakte Beschreibung zu hinterlegen, statt alle Elemente der Matrix explizit aufzuführen.

Bei einer dünnbesetzten Matrix kann es ebenfalls vorteilhaft sein, nicht alle Elemente der Matrix zu speichern, sondern lediglich die Elemente, die von Null verschieden sind, sowie ihre entsprechende Position in der Matrix.

In anderen Worten ist also bevorzugt vorgesehen, dass die Annotationsinformation die Matrix als obere Dreiecksmatrix, untere Dreiecksmatrix, Diagonalmatrix, Bandmatrix, Matrix mit gleichen Werten auf der Hauptdiagonale, Matrix mit gleichen Werten auf der Nebendiagonale, Einheitsmatrix, symmetrische Matrix, dünnbesetzte Matrix, Permutationsmatrix und/oder reguläre Matrix charakterisiert, und beim Speichern der Matrix die Matrix als Array gespeichert wird und diejenigen Elemente der Matrix, die Null sind nicht gespeichert werden.

In Zusammenhang mit dem Speichern von zwei Matrizen in einer gemeinsamen Matrix ist es beispielsweise möglich bei einer LR-Zerlegung, die durch die LR-Zerlegung erhaltene linke untere normierten Dreiecksmatrix L und die rechte obere Dreiecksmatrix R nicht einzeln als zwei Matrizen zu speichern, sondern gemeinsam in einer Matrix zu speichern, wobei der Wert 1 auf der Hauptdiagonale der L Matrix implizit angenommen wird.

In anderen Worten ist also bevorzugt vorgesehen, dass die Annotationsinformation zwei Matrizen als obere Dreiecksmatrix, untere Dreiecksmatrix, Diagonalmatrix, Bandmatrix, Matrix mit gleichen Werten auf der Hauptdiagonale, Matrix mit gleichen Werten auf der Nebendiagonale, Einheitsmatrix, symmetrische Matrix, dünnbesetzte Matrix, Permutationsmatrix und/oder reguläre Matrix charakterisiert, und beim Speichern der zwei Matrizen diese derart gemeinsam in einer Matrix gespeichert werden, dass die nicht-Nullelemente der ersten Matrix auf den Positionen der Nullelemente und/oder den Positionen mit Elementen mit Wert 1 der zweiten Matrix gespeichert werden und/oder dass die nicht-Nullelemente der zweiten Matrix auf den Positionen der Nullelemente und/oder den Positionen mit Elementen mit Wert 1 der ersten Matrix gespeichert werden.

In Zusammenhang mit transponierten Matrizen lässt sich zudem das Abspeichern einer zu einer Matrix M transponierten Matrix $M^T$ vollständig umgehen, da sich durch das Transponieren dem Grund nach nur die Abarbeitungsreihenfolge ändert. Statt die transponierte Matrix $M^T$ im Speicher abzulegen und mit der im Speicher abgelegten transponierten Matrix $M^T$ eine Matrix-Spaltenmatrix Multiplikation $M^T \times V = C$ zu berechnen, kann die Matrix-Spaltenmatrix Multiplikation $M^T \times V = C$ implementiert werden, indem die Indizes beim Zugriff auf die Matrix M beim Berechnen der Matrix-Spaltenmatrix Multiplikation vertauscht werden. Dadurch wird einerseits Speicherplatz gespart wie auch andererseits Laufzeit beim Umkopieren der Ursprungsmatrix M. Somit ist gemäß einer bevorzugten Weiterbildung ist vorgesehen, dass beim Erzeugen des Steuerungsprogrammes die hinterlegten Annotationsinformationen derart berücksichtigt werden, dass im Steuerungsprogramm beim Umsetzten des Bearbeitungsauftrages, der wenigstens eine Matrix involviert, eine Abarbeitungsreihenfolge von Matrixelementen der Matrix definiert ist.

Eine weitere Möglichkeit Rechenschritte einzusparen und entsprechend die Laufzeit des Steuerprogrammes zu verringern, bietet sich bei Permutationen von Werten einer Zeilen- oder Spaltenmatrix. In der Regel wird eine solche Permutation durch eine Matrixmultiplikation der entsprechenden Spalten- oder Zeilenmatrix mit einer Permutationsmatrix dargestellt, wobei bei der Permutationsmatrix in jeder Zeile und in jeder Spalte genau ein Eintrag eins ist und alle anderen Einträge null sind. Allerdings ist aufgrund der Charakteristik der Permutationsmatrix, bei der in jeder Spalte bzw. jeder Zeile nur jeweils genau eine Eins vorkommt, das Ermitteln der neuen Positionen der Werte der Spalten- oder Zeilenmatrix über Vergleiche weniger rechenintensiv als das Durchführen einer Matrixmultiplikation. Entsprechend ist gemäß einer bevorzugten Weiterbildung der Erfindung vorgesehen, dass die Annotationsinformation die Matrix als Permutationsmatrix beschreibt und beim Erzeugen des Steuerungsprogrammes die hinterlegten Annotationsinformationen derart berücksichtigt wird, dass beim Umsetzen eines Bearbeitungsauftrages, der die Permutationsmatrix involviert und Positionen von Werten einer Spalten- oder Zeilenmatrix vertauscht, auf der Zielplattform eine Matrixmultiplikation durch einen Vergleich ersetzt ist.

In Bezug zur Annotationsinformation ist gemäß einer bevorzugten Weiterbildung der Erfindung vorgesehen, dass die Annotationsinformation ausgewählt ist aus der Gruppe umfassend obere Dreiecksmatrix, untere Dreiecksmatrix, Diagonalmatrix, Bandmatrix, Matrix mit gleichen Werten auf der Hauptdiagonale, Matrix mit gleichen Werten auf der Nebendiagonale, Einheitsmatrix, symmetrische Matrix, transponierte Matrix, Permutationsmatrix und reguläre Matrix. Wie die oben beschriebenen Beispiele zeigen, ermöglichen all diese Eigenschaften der Matrix Rechenschritte und/oder Speicherplatz einzusparen.

In Zusammenhang mit dem Bearbeitungsauftrag ist gemäß einer weiteren Weiterbildung der Erfindung vorgesehen, dass der Bearbeitungsauftrag, der wenigstens eine Matrix involviert, als Matrixmultiplikation, Invertierung einer Matrix, Matrixaddition, Matrixsubtraktion, Zerlegung einer Matrix und/oder Lösen eines linearen Gleichungssystems, ausgestaltet ist. Die Matrixmultiplikation umfasst bevorzugt eine Multiplikation zweier oder mehrerer Matrizen miteinander, und zudem auch eine Multiplikation einer Matrix mit einer Spalten- oder Zeilenmatrix (also einer Matrix mit $n = 1$ oder $m = 1$), was auch als Matrix-Vektor Multiplikation bezeichnet wird.

Gemäß einer bevorzugten Weiterbildung der Erfindung umfasst das Erzeugen des Steuerungsprogrammes für die Zielplattform aus dem graphischen Steuerungsmodell der Entwicklungsplattform die Schritte

- Erzeugen einer Zwischendarstellung aus dem graphischen Steuerungsmodell,
- Optimieren der erzeugten Zwischendarstellung, und
- Erzeugen des Steuerungsprogrammes für die Zielplattform durch Übersetzen der optimierten Zwischendarstellung,

wobei wenigstens einer der Schritte unter Berücksichtigung der in der Definitionsdatenbank hinterlegten Annotationsinformationen durchgeführt wird.

Es wird also bevorzugt ein Verfahren zum Erzeugen des Steuerungsprogrammes für die Zielplattform aus dem graphischen Steuerungsmodell der Entwicklungsplattform bereitgestellt, bei dem das Erzeugen des Steuerungsprogrammes ein Transformieren des graphischen Steuerungsmodelles in eine Zwischendarstellung, ein bevorzugt sukzessives Optimieren der Zwischendarstellung und ein Übersetzen der optimierten Zwischendarstellung in das Steuerungsprogrammes umfasst, wobei wenigstens einer der Schritte unter Berücksichtigung der in der Definitionsdatenbank hinterlegten Annotationsinformationen durchgeführt wird. Bevorzugt wird schon beim Erzeugen der Zwischendarstellung aus dem graphischen Steuerungsmodell die Annotationsinformation berücksichtigt. Weil die Annotationsinformation bevorzugt während der Transformation in die Zwischendarstellung berücksichtigt wird, sind noch sämtliche Informationen des graphischen Steuerungsmodelles verfügbar.

Bevorzugt werden in der Zwischendarstellung die Blöcke des Blockdiagrammes des graphischen Steuerungsmodells in Anweisungen mit fester Ausführungsreihenfolge übersetzt, wodurch die Struktur der Zwischendarstellung semantisch eine textuelle Programmiersprache abbildet. Der Schritt des Transformierens kann eine Mehrzahl von Teilschritten beinhalten, wie das Überprüfen einer Anzahl von Regeln und das Anfügen von weiteren Codegenerierungsinformationen. Das Weglassen von Rechenschritten und/oder das Weglassen von Zugriffen auf die Matrix kann prinzipiell in einem beliebigen Zwischenschritt des Transformierens erfolgt.

Vorteilhafterweise werden durch das erfindungsgemäße Verfahren die in der Definitionsdatenbank hinterlegten Annotationsinformationen zum Aufbau von im graphischen Steuerungsmodell verwendeten Matrizen beim Erzeugen der Zwischendarstellung in der Form berücksichtigt, dass Bearbeitungsaufträge, die die Matrix involvieren weniger Rechenschritte erfordern und/oder das Speichern der Matrizen optimiert ist. Dadurch wird nicht nur insgesamt effizienterer Code erzeugt, sondern auch die Optimierung auf der Zwischendarstellung beschleunigt, da bereits zu Beginn weniger Rechenoperationen betrachtet werden müssen.

Gemäß einer weiteren Weiterbildung der Erfindung ist vorgesehen, dass das Steuerungsprogramm in C-Code erzeugt wird. Unter C-Code wird vorliegend eine Programmiersprache verstanden, die von der Syntax und/oder vom grundlegenden Sprachaufbau an C angelehnt ist. Solche Sprachen weisen beispielsweise durch Semikolons abgeschlossene Anweisungen, durch geschweifte Klammern getrennte Codeblöcke, durch Klammern getrennte Parameter und/oder in Infixnotation definierte arithmetische und logische Ausdrücke auf. Sie werden teilweise auch als "Sprachen mit geschweiften Klammern" bezeichnet. Bevorzugt umfasst C-Code vorliegend auch Code in der Programmiersprache C++, Handel-C und/oder SA-C. Weiter bevorzugt wird darunter eine standardisierte Form von C-Code wie ANSI C, ANSI C++, ISO C, ISO C++, Standard C und/oder Standard C++ verstanden, die vom *American National Standards Institute* (ANSI), ISO/IEC JTC 1/SC 22/WG 14 der *International Organization for Standardization* (ISO), ISO/IEC JTC 1/SC 22/WG 21 des "The C++ Standards Committee - ISOCPP" der *International Organization for Standardization* (ISO) und/oder der *International Electrotechnical Commission* (IEC) veröffentlicht werden.

Die Erfindung betrifft ferner ein Verfahren zum Konfigurieren einer als Steuergerät ausgestalteten Zielplattform, wobei die Zielplattform wenigstens eine Recheneinheit umfasst, und bevorzugt wenigstens einen Sensor und/oder Aktor aufweist, um Daten eines physikalischen Prozesses zu erfassen und/oder auf einen physikalischen Prozess einzuwirken, umfassend die Schritte:

- Einlesen eines graphischen Steuerungsmodell einer Entwicklungsplattform
- Erzeugen eines Steuerungsprogrammes für die Zielplattform aus dem eingelesenen graphischen Steuerungsmodell nach dem oben beschriebenen Verfahren,
- Erzeugen eines für die Recheneinheit der Zielplattform ausführbaren Codes durch Kompilieren des erzeugten Steuerungsprogrammes,
- Übertragen des erzeugten ausführbaren Codes auf die Zielplattform und/oder Hinterlegen des erzeugten ausführbaren Codes auf einem nicht-flüchtigen Speicher der Zielplattform und/oder Ausführen des erzeugten ausführbaren Codes durch die Recheneinheit der Zielplattform.

Das Steuergerät umfasst bevorzugt eine Schnittstelle zur Verbindung mit der Entwicklungsplattform. Weiter bevorzugt umfasst das Steuergerät einen Mikrocontroller mit einer von einem Prozessor der Entwicklungsplattform abweichenden Architektur, einen Arbeitsspeicher und einen nichtflüchtigen Speicher. Weiter bevorzugt kann das Steuergerät auch mehr als eine Recheneinheit umfassen, beispielsweise eine Zentrale Recheneinheit und eine an Matrixoperationen angepasste Recheneinheit wie eine Tensor Processing Unit.

Weiterhin betrifft die Erfindung eine Vorrichtung zur Datenverarbeitung umfassend Mittel zur Ausführung des oben beschriebenen computerimplementierten Verfahrens zum Erzeugen des Steuerungsprogrammes.

Besonders bevorzug umfasst die Vorrichtung eine Definitionsdatenbank zum Speichern von Informationen zum graphischen Steuerungsmodell, und insbesondere zum Speichern von Annotationsinformationen zum Aufbau von im graphischen Steuerungsmodell verwendeten Matrizen. Die Definitionsdatenbank kann eine Baumstruktur aufweisen und/oder als eine einfache Datei in einem Speicher des der Vorrichtung hinterlegt sein. Alternativ kann es vorgesehen sein, die Definitionsdaten und Annotationsinformationen in einem dedizierten Datenbanksystem zu hinterlegen.

Ferner betrifft die Erfindung ein Computerprogrammprodukt umfassend Befehle, die bei der Ausführung des Programms durch einen Computer diesen veranlassen, das oben beschriebene computerimplementierte Verfahren zum Erzeugen des Steuerungsprogrammes auszuführen.

Ferner betrifft die Erfindung einen computerlesbaren Datenträger, auf dem das obige Computerprogrammprodukt gespeichert ist.

Bevorzugt sind die Befehle auf dem computerlesbaren Datenträger eingebettet, und die Befehle bewirken, wenn sie von einem Prozessor des Computers ausgeführt werden, dass der Prozessor das Verfahren zum Erzeugen des Steuerungsprogrammes ausführt.

Die technischen Vorteile und Effekte des Verfahrens zum Konfigurieren der als Steuergerät ausgestalteten Zielplattform, der Vorrichtung zur Datenverarbeitung, des Computerprogrammproduktes und des computerlesbaren Datenträgers ergeben sich für den Fachmann durch die Beschreibung des Verfahrens zum Erzeugen des Steuerungsprogrammes, sowie durch die nachfolgend beschriebenen Ausführungsbeispiele.

Die Erfindung wird nachfolgend unter Bezugnahme auf die Zeichnungen näher erläutert. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

In der Zeichnung zeigen

Fig. 1 schematisch eine Vorrichtung zur Datenverarbeitung, gemäß einem bevorzugten Ausführungsbeispiel der Erfindung,

Fig. 2 schematisch die auf der Vorrichtung gemäß Figur 1 installierten Softwarekomponenten, und

Fig. 3 schematisch ein Flussdiagramm eines Verfahrens zum Erzeugen eines Steuerungsprogrammes für eine Zielplattform aus einem graphischen Steuerungsmodell, gemäß einem bevorzugten Ausführungsbeispiel der Erfindung.

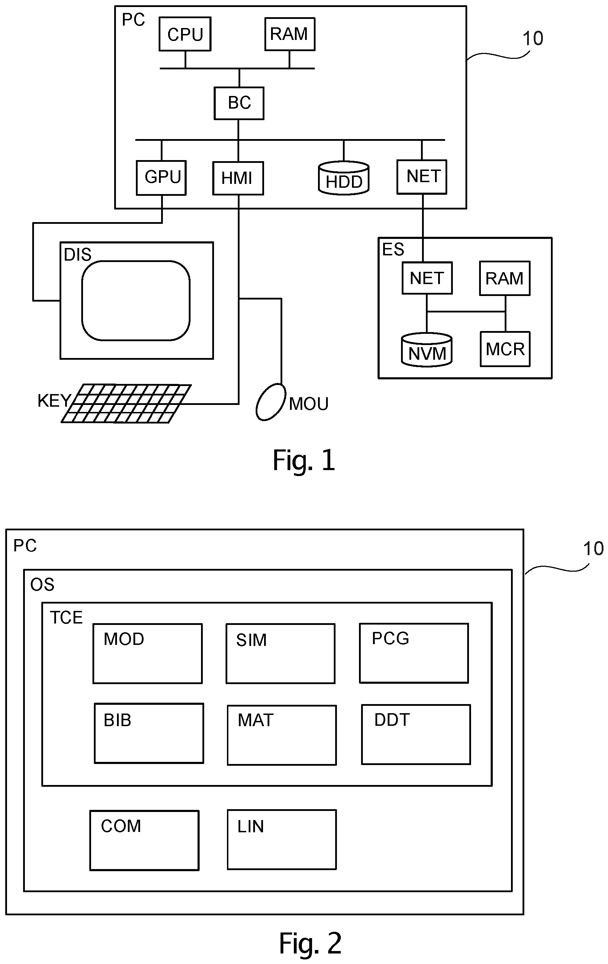

Figur 1 zeigt schematisch eine beispielhafte Ausführung einer Vorrichtung zur Datenverarbeitung 10, vorliegend Computersystem PC genannt. Das Computersystem PC ist dazu eingerichtet ein Verfahren zum Erzeugen eines Steuerungsprogrammes für eine Zielplattform aus einem graphischen Steuerungsmodell einer Entwicklungsplattform - sprich des Computersystems - auszuführen. Das Computersystem PC ist dazu ausgeführt Matrixoperationen zu unterstützen und weist einen Prozessor CPU auf, der insbesondere als Mehrkernprozessor realisiert sein kann, einen Arbeitsspeicher RAM und einen Buscontroller BC. Bevorzugt ist das Computersystem PC dazu ausgelegt, von einem Nutzer direkt manuell bedient zu werden, wobei über eine Grafikkarte GPU ein Monitor DIS und über eine Mensch-Maschine-Schnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem PC umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES - sprich die Zielplattform - angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für die Zielplattform ausgeführt sein. Zweckmäßigerweise umfasst es eine Schnittstelle NET zur Verbindung mit dem Computersystem PC, einen Mikrocontroller MCR mit einer von dem Prozessor des Computersystems PC abweichenden Architektur, einen Arbeitsspeicher RAM und einen nichtflüchtigen Speicher NVM.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner und/oder dem Steuergerät ES aufzubauen.

Eine technische Rechenumgebung TCE ermöglicht die Erstellung von Modellen - insbesondere graphische Steuerungsmodelle und die Erzeugung eines Steuerungsprogrammes, auch Quellcode genannt, aus den graphischen Steuerungsmodellen. In einer Modellierumgebung MOD können vorzugsweise über eine graphische Benutzerschnittstelle graphischen Steuerungsmodellen eines dynamischen Systems erstellt werden. Hierbei kann es sich insbesondere um Blockdiagramme handeln, welche mehrere Blöcke umfassen und das zeitliche Verhalten und/oder interne Zustände eines dynamischen Systems beschreiben.

Zumindest einige der Blöcke können über Signalverbindungen miteinander verbunden sein, wobei die Signalverbindungen gerichtete Verbindungen zum Austausch von Daten darstellen, wobei die Daten skalar oder zusammengesetzt sein können und insbesondere als Matrizen ausgeführt sein können. Über die Blöcke können auf den Daten durchzuführende Operationen und/oder Rechenschritte definiert werden. Insbesondere können innerhalb der Blöcke Matrixoperationen berechnet werden und/oder über die Signalverbindungen als Matrizen ausgestaltete Daten ausgetauscht werden.

Die Rechenumgebung TCE umfasst eine oder mehrere Bibliotheken BIB, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems PC.

Aus einem erstellten Modell kann mit Hilfe eines Codegenerators PCG der Quellcode bevorzugt in einer Programmiersprache wie C erzeugt werden. Dafür wird im vorliegenden Ausführungsbeispiel das Verfahren zum Erzeugen eines Steuerungsprogrammes für eine Zielplattform aus dem graphischen Steuerungsmodell der Entwicklungsplattform durchgeführt. Zudem wird vorliegend in einer Definitionsdatenbank DDT zusätzliche Informationen zu dem Modell, insbesondere die Annotationsinformationen zum Aufbau von den im graphischen Steuerungsmodell verwendeten Matrizen hinterlegt.

Weiterhin können in der Definitionsdatenbank DDT auch andere zusätzliche Informationen zu dem Modell, wie Informationen zu den Variablen in den Blöcken - Blockvariablen genannt - hinterlegt werden. Den Blockvariablen können Wertebereiche und/oder Skalierungen zugeordnet werden, um eine Berechnung des Modells mit Festkomma-Instruktionen zu unterstützen. Auch gewünschte Eigenschaften des Quellcodes, beispielsweise Konformität zu einem Standard wie MISRA, können in der Definitionsdatenbank DDT eingestellt bzw. hinterlegt werden. Jede Blockvariable kann einem vorgegebenen Variablentyp zugeordnet werden und/oder es können eine oder mehrere gewünschte Eigenschaften, wie beispielsweise die Zulässigkeit von Optimierungen wie einem Zusammenfassen von Variablen eingestellt werden.

Der Codegenerator PCG wertet vorzugsweise die Einstellungen der Definitionsdatenbank DDT und insbesondere die hinterlegten Annotationsinformationen aus und berücksichtigt diese bei der Erzeugung des Quellcodes. Die Definitionsdatenbank DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatenbank kann eine Programmschnittstelle und/oder Import-/Export-Funktionen aufweisen.

Das Computersystem PC weist in diesem Ausführungsbeispiel einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

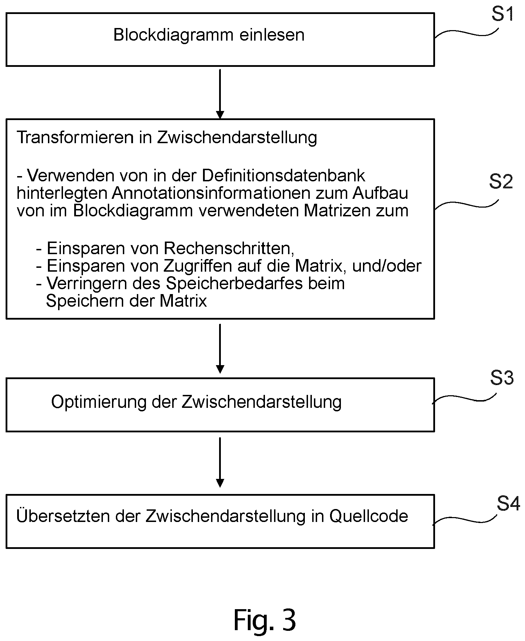

Figur 3 zeigt einen schematischen Ablaufplan einer Ausführungsform des erfindungsgemäßen Verfahrens zum Erzeugen eines Steuerungsprogrammes für eine Zielplattform aus dem graphischen Steuerungsmodell der Entwicklungsplattform. Das Verfahren kann vollständig von einem Prozessor einer beispielhaften Ausführung des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte auf den Servern durchgeführt werden.

In Schritt S1 (Blockdiagramm einlesen) wird ein graphisches Steuerungsmodell umfassend ein Blockdiagramm eingelesen. Im graphischen Steuerungsmodell wird mindestens eine Matrixoperation durchgeführt. Zweckmäßigerweise umfasst das Einlesen des Blockdiagramms auch ein Auslesen mindestens einer Annotationsinformation zum Aufbau der Matrix aus der Definitionsdatenbank DDT.

In Schritt S2 (Transformiere in Zwischendarstellung), wird das graphische Steuerungsmodell in eine Zwischendarstellung transformiert, die vorzugsweise einen oder mehrere hierarchische Graphen umfasst. Hierbei kann es sich insbesondere um einen Datenflussgraph, einen Kontrollflussgraph oder eine Baumstruktur handeln. Neben dem Blockdiagramm werden zweckmäßigerweise auch Zusatzinformationen aus einer Definitionsdatenbank DDT bei der Erzeugung der Zwischendarstellung berücksichtigt bzw. fließen in diese ein. Dies kann auch Situationen umfassen, in denen Elemente basierend auf Informationen in der Definitionsdatenbank DDT erzeugt werden oder Eigenschaften von Elementen bzw. für die Codeerzeugung relevante Einstellungen aus der Definitionsdatenbank DDT extrahiert werden.

In diesem Ausführungsbeispiel werden beim Transformieren in die Zwischendarstellung die in der Definitionsdatenbank hinterlegten Annotationsinformationen zum Aufbau der im graphischen Steuerungsmodell verwendeten Matrizen derart berücksichtigt, dass a) auf der Zielplattform beim Umsetzen des Bearbeitungsauftrages, der wenigstens eine Matrix involviert, die Rechengeschwindigkeit erhöht ist und/oder auf der Zielplattform beim Speichern der Matrizen der Speicherbedarf verringert ist. Dies wird vorliegend umgesetzt indem, einerseits bei Matrixmultiplikationen, diejenigen Rechenschritte weggelassen werden, bei denen die komponentenweise Multiplikation Null ergibt, sowie bei Matrixadditionen und/oder Matrixsubtraktionen diejenigen Rechenschritte weggelassen werden, bei denen zwei Nullelemente miteinander addiert oder voneinander subtrahiert werden. Anderseits wird dies vorliegend umgesetzt, indem beim Speichern der Matrix auf der Zielplattform die Matrix als Array gespeichert wird, und/oder zwei Matrizen gemeinsam in einer Matrix gespeichert werden.

In Bezug zum Weglassen von denjenigen Rechenschritten, bei denen die komponentenweise Multiplikation Null ergibt, zeigt der im folgenden dargestellten Bearbeitungsauftrag der Multiplikation einer 5x5 Matrix mit einer 5x1 Spaltenmatrix wie das Einsparen von Rechenschritten beim Berücksichtigen der Annotationsinformationen erfolgt:

$$\begin{pmatrix} 3 & 0 & 0 & 0 & 0 \\ 0 & 3 & 0 & 0 & 0 \\ 0 & 0 & 3 & 0 & 0 \\ 0 & 0 & 0 & 3 & 0 \\ 0 & 0 & 0 & 0 & 3 \end{pmatrix} * \begin{pmatrix} 2 \\ 3 \\ 4 \\ 5 \\ 6 \end{pmatrix} = \begin{pmatrix} 6 \\ 9 \\ 12 \\ 15 \\ 18 \end{pmatrix}$$

Ohne Kenntnisse über den Aufbau der Matrix als Diagonalmatrix mit Wert 3 auf der Diagonale müsste der Code zur Implementierung des Bearbeitungsauftrages folgendermaßen aussehen:

```
For (i = 0; i < 5; i++)

    C[i] = A[i,0] * B[i];

For (j = 1; j < 5; j++)

    C[i] = C[i] + A[i,j] * B[i];
```

Dies entspricht insgesamt 5*5 = 25 Multiplikationen und 5*4 = 20 Additionen. Da das Verfahren zum Erzeugen des Steuerungsprogrammes aus dem graphischen Steuerungsmodell allerdings beim Erzeugen des Steuerungsprogrammes für die Zielplattform die hinterlegte Annotationsinformationen berücksichtigt, die die Matrix vorliegend als Diagonalmatrix mit konstantem Wert 3 auf der Diagonalen charakterisiert, wird folgender Quellcode erzeugt:

```
For (i = 0; i < 5; i++)
    C[i] = A[i,i] * B[i];
```

Dies entspricht lediglich 5 Multiplikationen. In diesem Beispiel sind also nur 5 Multiplikationen notwendig, anstelle von 5*5 Multiplikationen plus 4*5 Additionen, wenn im allgemeinen Fall keine Information über den Aufbau der Matrix bekannt ist. Da zudem aus der Annotationsinformation hervorgeht, dass die Werte der Hauptdiagonalen gleich sind, entfallen 4 Zugriffe auf die Matrix, da der gemeinsame Wert 3 in einem Register zwischengespeichert wird:

```
For (i = 0; i < 5; i++)
    C[i] = 3 * B[i];
```

In Bezug zum Speichern zweier Matrizen in einer Matrix auf der Zielplattform zeigt das folgende Beispiel wie das Verringern des Speicherbedarfs erfolgt:
Bei einer LU-Zerlegung der Matrix M werden eine linke untere normierte Dreiecksmatrix L und eine obere Dreiecksmatrix U erhalten.

$$M = \begin{matrix} 7 & 8 & 9 \\ 1 & 2 & 3 \\ 4 & 5 & 6 \end{matrix} \qquad L = \begin{matrix} 1 & 0 & 0 \\ 0.1429 & 1 & 0 \\ 0,5714 & 0,5 & 1 \end{matrix} \qquad U = \begin{matrix} 7 & 8 & 9 \\ 0 & 0,8571 & 1,7143 \\ 0 & 0 & 0 \end{matrix}$$

Anstatt diese einzeln zu speichern, wird unter Berücksichtigung der Annotationsinformation, die die Matrix L als linke untere normierte Dreiecksmatrix charakterisiert und die Matrix U als obere Dreiecksmatrix charakterisiert, beide Matrizen L und U in einer Matrix LU mit der Größe 3x3 abgelegt:

$$LU = \begin{matrix} 7 & 8 & 9 \\ 0,1429 & 0,8571 & 1,7143 \\ 0,5714 & 0,5 & 0 \end{matrix}$$

Weiterhin wird in Bezug zum Speichern einer Matrix als Array auf folgendes Ausführungsbeispiel verwiesen: Anstatt die Diagonalmatrix A der Größe 5x5 als Matrix mit 25 Elementen zu speichern, wird diese unter Berücksichtigung der Annotationsinformation, die die Matrix als Diagonalmatrix charakterisiert, die Matrix als Array M der Größe 5 abgelegt:

$$A = \begin{matrix} 2 & 0 & 0 & 0 & 0 \\ 0 & 3 & 0 & 0 & 0 \\ 0 & 0 & 4 & 0 & 0 \\ 0 & 0 & 0 & 5 & 0 \\ 0 & 0 & 0 & 0 & 6 \end{matrix} \qquad M = \begin{matrix} 2 & 3 & 4 & 5 & 6 \end{matrix}$$

Zudem wird im vorliegenden Ausführungsbeispiel in Bezug zur Erhöhung der Rechengeschwindigkeit beim Erzeugen des Steuerungsprogrammes die hinterlegten Annotationsinformationen derart berücksichtigt, dass im Steuerungsprogramm beim Umsetzten des Bearbeitungsauftrages, der wenigstens eine Matrix involviert, eine Abarbeitungsreihenfolge von Matrixelementen der Matrix definiert ist, wie dies am folgenden Beispiel illustriert wird:
Vorgegeben sei eine Matrix M sowie der die Transponierte $M^T$ der Matrix M involvierende Bearbeitungsauftrag $M^T \times V = C$, bei dem die Matrix $M^T$ mit der Spaltenmatrix V multipliziert wird.

$$M = \begin{matrix} 7 & 8 & 9 \\ 1 & 2 & 3 \\ 4 & 5 & 6 \end{matrix}$$

Ohne Berücksichtigung der Annotationsinformation kann der Bearbeitungsauftrag nur dahingehend implementiert werden, indem die transponierte Matrix $M^T$ explizit berechnet und im Speicher abgelegt wird:

```
For (i = 0; i < 3; i++)
  C[i] = MT[i,0] * V[i];

For (j = 1; j < 3; j++)
  C[i] = C[i] + MT[i,j] * V[i];
```

$$M^T = \begin{matrix} 7 & 1 & 4 \\ 8 & 2 & 5 \\ 9 & 3 & 6 \end{matrix}$$

Anschließend kann dann der Bearbeitungsauftrag $M^T$ x V = C ausgeführt werden:

```
For (i = 0; i < 3; i++)
  C[i] = MT[i,0] * V[i];

For (j = 1; j < 3; j++)
  C[i] = C[i] + MT[i,j] * V[i];
```

Bei Berücksichtigung der Annotationsinformation, die die Matrix $M^T$ als Transponierte der Matrix M beschreibt, wird der Bearbeitungsauftrag $M^T$ x V = C direkt durch Vertauschen der Indizes beim Zugriff auf die Matrix M implementiert:

```
For (i = 0; i < 3; i++)
  C[i] = M[0,i] * V[i];

For (j = 1; j < 3; j++)
  C[i] = C[i] + M[j,i] * V[i];
```

Dadurch wird einerseits Speicherplatz gespart wie auch andererseits Laufzeit beim Umkopieren der Ursprungsmatrix M.

Zurück zu Figur 3 wird in Schritt S3 (weitere Optimierung Zwischendarstellung) die Zwischendarstellung optimiert und insbesondere die hierarchischen Graphen optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Verschiedene Strategien wie "Constant folding" oder eine Eliminierung von "Dead Code" können während der Optimierung angewandt werden. Prinzipiell ist es möglich, dass mehrere in Rahmen der Transformation erzeugte Variablen in Schritt S3 zusammengefasst werden.

In Schritt S4 (Übersetze Zwischendarstellung in Quellcode) werden die optimierte Zwischendarstellung bzw. die optimierten hierarchischen Graphen, welche aus den gesamten durchgeführten Zwischenschritten resultieren, in Quellcode einer textuellen Programmiersprache, vorliegend C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block des Blockdiagramms, zu erzeugen und insbesondere in Form von Kommentaren in den Quellcode einzubinden, um die Lesbarkeit des Quellcodes zu verbessern und/oder ein Debugging zu vereinfachen.

Während oder nach der Codegenerierung können Informationen über das Blockdiagramm oder Ergebnisse der Codegenerierung, wie beispielsweise eingesparte Rechenschritte oder generierte Warnungen, in der Definitionsdatenbank DDT gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht nach dem AUTOSAR-Standard.

Bezugszeichenliste

| 10 | Vorrichtung zur Datenverarbeitung |
|---|---|
| PC | Computersystem |
| CPU | Prozessor |
| RAM | Arbeitsspeicher |
| BC | Buscontroller |
| GPU | Grafikkarte |
| DIS | Monitor |
| HMI | Peripherieschnittstelle |
| KEY | Tastatur |
| MOU | Maus |
| HDD | nichtflüchtiger Datenspeicher |
| NET | Schnittstelle, Netzwerkschnittstelle |
| ES | Steuergerät |
| MCR | Microcontroller |
| NVM | Speicher |
| OS | Betriebssystem |
| TCE | technische Rechenumgebung |
| MOD | Modellierungsumgebung |
| BIB | Bibliothek |
| MAT | Skriptumgebung |
| SIM | Simulationsumgebung |
| PCT | Codegenerator |
| DDT | Definitionsdatensammlung |
| COM | Compiler |
| LIN | Linker |

**Patentansprüche**

1. Computerimplementiertes Verfahren zum Erzeugen eines Steuerungsprogrammes für eine Zielplattform aus einem graphischen Steuerungsmodell einer Entwicklungsplattform, wobei die Entwicklungsplattform eine Definitionsdatenbank zum Speichern von Informationen zum graphischen Steuerungsmodell umfasst und dazu ausgestaltet ist, Matrixoperationen zu unterstützen,
**dadurch gekennzeichnet, dass**
in der Definitionsdatenbank Annotationsinformationen zum Aufbau von im graphischen Steuerungsmodell verwendeten Matrizen hinterlegbar sind und dass beim Erzeugen des Steuerungsprogrammes für die Zielplattform die hinterlegten Annotationsinformationen derart berücksichtigt werden, dass

a) auf der Zielplattform beim Umsetzten eines Bearbeitungsauftrages, der wenigstens eine Matrix involviert, eine Rechengeschwindigkeit erhöht ist und/oder

b) auf der Zielplattform beim Speichern der Matrizen der Speicherbedarf verringert ist.

2. Verfahren nach Anspruch 1, wobei beim Erzeugen des Steuerungsprogrammes die hinterlegten Annotationsinformationen derart berücksichtigt werden, dass beim Umsetzen des Bearbeitungsauftrages, der wenigstens eine Matrix involviert, auf der Zielplattform

   - weniger Rechenschritte erforderlich sind, und/oder
   - weniger Zugriffe auf die Matrix erforderlich sind.

3. Verfahren nach einem der vorhergehenden Ansprüche, wobei die Zielplattform wenigstens zwei Recheneinheiten zum Umsetzten von Bearbeitungsaufträgen umfasst, wobei beim Erzeugen des Steuerungsprogrammes die hinterlegten Annotationsinformationen derart berücksichtigt werden, dass festgelegt wird, welche der Recheneinheiten zum Umsetzten des Bearbeitungsauftrages, der wenigstens eine Matrix involviert, verwendet wird.

4. Verfahren nach einem der vorhergehenden Ansprüche, wobei beim Erzeugen des Steuerungsprogrammes die hinterlegten Annotationsinformationen derart berücksichtigt werden, dass beim Speichern der Matrix auf der Zielplattform

   - eine Matrix als Array gespeichert wird, oder
   - zwei Matrizen gemeinsam in einer Matrix gespeichert werden.

5. Verfahren nach einem der vorhergehenden Ansprüche, wobei beim Erzeugen des Steuerungsprogrammes die hinterlegten Annotationsinformationen derart berücksichtigt werden, dass im Steuerungsprogramm beim Umsetzten des Bearbeitungsauftrages, der wenigstens eine Matrix involviert, eine Abarbeitungsreihenfolge von Matrixelementen der Matrix definiert ist.

6. Verfahren nach einem der vorhergehenden Ansprüche, wobei die Annotationsinformation die Matrix als Permutationsmatrix beschreibt und beim Erzeugen des Steuerungsprogrammes die hinterlegten Annotationsinformationen derart berücksichtigt wird, dass beim Umsetzen eines Bearbeitungsauftrages, der die Permutationsmatrix involviert und Positionen von Werten einer Spalten- oder Zeilenmatrix vertauscht, auf der Zielplattform eine Matrixmultiplikation durch einen Vergleich ersetz ist.

7. Verfahren nach einem der vorhergehenden Ansprüche, wobei die Annotationsinformation ausgewählt ist aus der Gruppe umfassend obere Dreiecksmatrix, untere Dreiecksmatrix, Diagonalmatrix, Bandmatrix, Matrix mit gleichen Werten auf der Hauptdiagonale, Matrix mit gleichen Werten auf der Nebendiagonale, Einheitsmatrix, symmetrische Matrix, transponierte Matrix, Permutationsmatrix und reguläre Matrix.

8. Verfahren nach einem der vorhergehenden Ansprüche, wobei der Bearbeitungsauftrag, der wenigstens eine Matrix involviert, als Matrixmultiplikation, Invertierung einer Matrix, Matrixaddition, Matrixsubtraktion, Zerlegung einer Matrix und/oder Lösen eines linearen Gleichungssystems, ausgestaltet ist.

9. Verfahren nach einem der vorhergehenden Ansprüche, wobei das Erzeugen des Steuerungsprogrammes für die Zielplattform aus dem graphischen Steuerungsmodell der Entwicklungsplattform die Schritte

   - Erzeugen einer Zwischendarstellung aus dem graphischen Steuerungsmodell,
   - Optimieren der erzeugten Zwischendarstellung, und
   - Erzeugen des Steuerungsprogrammes für die Zielplattform durch Übersetzen der optimierten Zwischendarstellung,

umfasst, und wenigstens einer der Schritte unter Berücksichtigung der in der Definitionsdatenbank hinterlegten Annotationsinformationen durchgeführt wird.

10. Verfahren nach einem der vorhergehenden Ansprüche, wobei das Steuerungsprogramm in C-Code erzeugt wird.

11. Verfahren zum Konfigurieren einer als Steuergerät (ES) ausgestalteten Zielplattform, wobei die Zielplattform wenigstens eine Recheneinheit (MCR) umfasst und bevorzugt wenigstens einen Sensor und/oder Aktor aufweist, um Daten eines physikalischen Prozesses zu erfassen und/oder auf einen physikalischen Prozess einzuwirken, umfassend die Schritte:

- Einlesen eines graphischen Steuerungsmodell einer Entwicklungsplattform,
- Erzeugen eines Steuerungsprogrammes für die Zielplattform aus dem eingelesenen graphischen Steuerungsmodell nach dem Verfahren nach einem der vorhergehenden Ansprüche,
- Erzeugen eines für die Recheneinheit (MCR) der Zielplattform ausführbaren Codes durch Kompilieren des erzeugten Steuerungsprogrammes,
- Übertragen des erzeugten ausführbaren Codes auf die Zielplattform und/oder Hinterlegen des erzeugten ausführbaren Codes auf einem nicht-flüchtigen Speicher (NVM) der Zielplattform und/oder Ausführen des erzeugten ausführbaren Codes durch die Recheneinheit (MCR) der Zielplattform.

12. Vorrichtung zur Datenverarbeitung umfassend Mittel zur Ausführung des Verfahrens nach einem der Ansprüche 1 bis 10.

13. Computerprogrammprodukt, umfassend Befehle, die bei der Ausführung des Programms durch einen Computer diesen veranlassen, das Verfahren nach einem der vorherigen Verfahrensansprüche auszuführen.

14. Computerlesbarer Datenträger, auf dem das Computerprogrammprodukt nach dem vorherigen Anspruch gespeichert ist.

Fig. 1

Fig. 2

Blockdiagramm einlesen                                    S1

Transformieren in Zwischendarstellung

- Verwenden von in der Definitionsdatenbank
hinterlegten Annotationsinformationen zum Aufbau      S2
von im Blockdiagramm verwendeten Matrizen zum

    - Einsparen von Rechenschritten,
    - Einsparen von Zugriffen auf die Matrix, und/oder
    - Verringern des Speicherbedarfes beim
      Speichern der Matrix

Optimierung der Zwischendarstellung                       S3

Übersetzten der Zwischendarstellung in Quellcode          S4

## Fig. 3

Europäisches
Patentamt

European
Patent Office

Office européen
des brevets

# EUROPÄISCHER RECHERCHENBERICHT

**Nummer der Anmeldung**

EP 23 21 4679

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BIK A J C ET AL: "ADVANCED COMPILER OPTIMIZATIONS FOR SPARSE COMPUTATIONS", JOURNAL OF PARALLEL AND DISTRIBUTED COMPUTING, ELSEVIER, AMSTERDAM, NL, Bd. 31, Nr. 1, 15. November 1995 (1995-11-15), Seiten 14-24, XP000537322, ISSN: 0743-7315, DOI: 10.1006/JPDC.1995.1141 * Zusammenfassung * * Seite 14, rechte Spalte, Absatz 1 – Absatz 2 * * Seite 15, rechte Spalte, Abschnitt 2.2, Absatz 1 – Absatz 3 * ----- | 1-14 | INV. G06F8/41 |
| X | AART J C BIK ET AL: "Compilation techniques for sparse matrix computations", SUPERCOMPUTING, ACM, 2 PENN PLAZA, SUITE 701 NEW YORK NY 10121-0701 USA, 1. August 1993 (1993-08-01), Seiten 416-424, XP058208769, DOI: 10.1145/165939.166023 ISBN: 978-0-89791-600-4 * Zusammenfassung * * Seite 416, linke Spalte, Abschnitt 1, Absatz 1 – rechte Spalte, Absatz 2 * * Seite 417, linke Spalte, Absatz 3 – Absatz 4 * * Seite 417, rechte Spalte, Abschnitt 2.1, Absatz 1 – Absatz 2 * * Seite 418, linke Spalte, Abschnitt 3, Absatz 1 – Ende der Spalte * ----- -/-- | 1-14 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 7. Mai 2024 | Milasinovic, Goran |

Seite 1 von 2

Europäisches Patentamt

European Patent Office

Office européen des brevets

# EUROPÄISCHER RECHERCHENBERICHT

**Nummer der Anmeldung**

**EP 23 21 4679**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Anonymous: "Sparse matrix – Wikipedia", , 21. November 2023 (2023-11-21), Seiten 1-10, XP093157036, Gefunden im Internet: URL:https://en.wikipedia.org/w/index.php?title=Sparse_matrix&oldid=1186230904 * Seite 1, Absatz 1 – Seite 3, Absatz 1 * * Seite 3, Abschnitt "Storage", Absatz 1 – Seite 4, Absatz 1 * ----- | 1-14 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 7. Mai 2024 | Milasinovic, Goran |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

**In der Beschreibung aufgeführte Patentdokumente**

- DE 102020124080 A1
- EP 2916183 B1